(19) **Europäisches Patentamt European Patent Office Office européen des brevets**

(11) **EP 4 214 024 B1**

(12) **EUROPEAN PATENT SPECIFICATION**

(45) Date of publication and mention of the grant of the patent:
**15.04.2026 Bulletin 2026/16**

(21) Application number: **20775599.2**

(22) Date of filing: **17.09.2020**

(51) International Patent Classification (IPC):
*G05B 19/408* (2006.01)   *B05B 13/04* (2006.01)
*B05B 12/12* (2006.01)

(52) Cooperative Patent Classification (CPC):
**G05B 19/4083; B05B 12/126; B05B 13/0431;
B05B 13/0452;** G05B 2219/36065;
G05B 2219/36089; G05B 2219/36091;
G05B 2219/45013; G05B 2219/45065

(86) International application number:
**PCT/EP2020/076002**

(87) International publication number:
**WO 2022/058015 (24.03.2022 Gazette 2022/12)**

(54) **A CONTROLLER FOR A PAINT ROBOT**

STEUERUNG FÜR EINEN FARBROBOTER

DISPOSITIF DE COMMANDE POUR ROBOT DE PEINTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.07.2023 Bulletin 2023/30**

(73) Proprietor: **ABB SCHWEIZ AG
5400 Baden (CH)**

(72) Inventors:
• **SKAAR, Andreas
4341 Bryne (NO)**
• **NESE, Stian
4345 Bryne (NO)**
• **JENSEN, Cato Andre
4016 Stavanger (NO)**
• **MOSSIGE, Morten
4365 Nærbø (NO)**

(74) Representative: **Kransell & Wennborg KB
P.O. Box 27834
115 93 Stockholm (SE)**

(56) References cited:
CN-A- 110 639 732      US-A1- 2008 125 909
US-A1- 2012 219 700

• **CHEN YOUDONG ET AL: "Trajectory planning
based on latitude for painting on spherical
surface", INDUSTRIAL INFORMATICS (INDIN),
2012 10TH IEEE INTERNATIONAL CONFERENCE
ON, IEEE, 25 July 2012 (2012-07-25), pages 431 -
435, XP032235354, ISBN: 978-1-4673-0312-5,
DOI: 10.1109/INDIN.2012.6301229**

EP 4 214 024 B1

## Description

### TECHNICAL FIELD

The present disclosure relates to the field of robotic control and in particular to a robot controller for a robot manipulator operating a spray gun.

### BACKGROUND

With the long-standing use of paint robots, the problem of controlling a robot-operated spray gun has been approached in a multitude of ways.

US3525382 discloses a system which is controlled in an open-loop fashion by a program that specifies both a tool velocity and a flow of an application material from the tool.

EP0145991 discloses a robot-carried spraying device, which is associated with measuring devices for determining a translation speed of the spraying device and flow control devices controlling the fluid flow as a function of the translation speed. This aims to achieve delivery of a constant amount of fluid per unit length of the workpiece.

US5373221 discloses a system which simulates a robot's execution of a programmed trajectory. The simulation takes into account a predefined corner rounding distance and similar parameters that may cause the actual trajectory to deviate from the programmed one. The simulated speed, rather than the speed according to the programmed trajectory, may be used to control the rate of a sealant flow from a sealant dispenser carried by the robot.

In US5292066, a command signal, which controls the flow of sealant from a sealing gun unit, is determined based on a commanded moving speed, at which the sealing gun is moved. A pre-taught program defines, directly or indirectly, the commanded moving speed, from which the flow of sealant is computed dynamically in the aim of a constant amount of sealant per unit length.

US4922852 discloses a robot having a controller programmed to guide a nozzle over the surface of a workpiece to dispense a bead of fluid thereon. The operation is guided on the basis of variables including a setpoint representing a desired total volume of fluid which is to be applied to a single workpiece. It is furthermore disclosed that the amount of fluid dispensed per unit distance may be controlled, namely, in view of a toolspeed signal emanating from the robot controller that represents the nozzle speed relative to the workpiece.

The applicant's earlier application published as US2008125900A1 is concerned with a painting appliance which uses spraying means and is moved over an area to be painted, in particular a robot with a painting application. The painting application is provided with a known spraying map, with known spraying parameters and paint amounts for a predetermined movement speed of the painting appliance. The paint amount is matched to a new movement speed in comparison to the predetermined movement speed. Furthermore, a set of new spraying parameters are calculated for said adapted paint amount in order to maintain a spraying map which is similar to the known spraying map. In further developments of this general concept, the new spraying map which the adapted spraying parameters produces can be improved gradually until it is similar to the earlier spraying map within a so-called similarity criterion. The expected coating thickness distribution after a change can be taken into account in the calculation of the new spraying parameters.

The publication US2012219700A1 discloses a method for coating vehicle body parts using a rotary atomizer carried by a multi-axis painting robot. A distinction is made between electric/kinematic operating variables and fluidic operating variables, such as paint flow. The electric/kinematic operating variables are modified dynamically during the movement of the atomizer whereas the fluidic operating variables are not changed.

An important class of industrial paint robot controllers are programmed in terms of a setpoint spray gun speed and a setpoint fluid flow per unit time. This is because spray guns, unlike simple dispensers, are additionally configurable with respect to a number of further setpoint quantities, which may include settings related to atomization, electrostatic charging and various air flows per unit time that may be adjusted to modify the shape of the spray plume for a given nozzle and paint type. Simulation software for predicting the paint thickness that will result from a given combination of setpoint speed, fluid flow, air flow etc. exists but is perceived as relatively inaccurate by some actors, who tend to run preliminary paint tests to verify the thickness before initiating commercial operation.

A problem underlying the present disclosure is the automatic control of paint robots that are programmed in terms of setpoint spray gun speed and setpoint fluid flow per unit time.

### SUMMARY

One objective is to make available a robot controller for executing a program with indications of setpoint speed of a robot arm and setpoint fluid flow per unit time of a spray gun supported by the robot arm. Another objective is to propose such a robot controller with an ability to adapt the execution of the program to fluctuations in the actual speed of the robot arm. A still further objective is to propose a method for controlling a robot arm and spray gun in accordance with a program that contains indications of setpoint speed of the robot arm and setpoint fluid flow per unit time of the spray gun.

These and other objectives are achieved by the invention defined in the appended independent claims. The dependent claims are related to embodiments of the invention.

A first aspect of the invention relates to a robot controller adapted to execute a program comprising an indication of a setpoint speed of a robot arm, an indication of a contemporaneous setpoint fluid flow per unit time of a spray gun supported by the robot arm, and an indication of a contemporaneous further setpoint quantity of the spray gun. The robot controller is configured to: obtain an estimate of actual speed of the robot arm; determine whether the estimate deviates from the setpoint speed; and, in case of a deviation, adjust the setpoint fluid flow per unit time in accordance with a first compensation function.

By controlling the spray gun on the basis of the adjusted setpoint fluid flow per unit time (e.g., a reduced flow if the actual speed of the robot arm is found to be lower than the setpoint speed) rather than the setpoint fluid flow per unit time, the invention helps maintain the end result of the painting close to the intent of the programmer, notably as regards the expected thickness of the sprayed fluid. Assuming that the actual speed is *dropping* from the setpoint speed during execution of the program, the invention may prevent the local formation of overly thick layers. In the special case of spray painting, excessive thickness may lead to flaking or premature aging of the coating layer. The invention may furthermore avoid wasteful use of spray fluid. This way, in applications where the spray fluid is distributed in prefilled per-batch cartridges, the filling level need not include a substantial margin to account for potential waste. In conditions where the actual speed *exceeds* the setpoint speed, finally, the invention ensures completeness and reliability of the coating at all points of the workpiece.

The invention also provides for stable and well-conditioned automatic control. More precisely, because the setpoint fluid flow is used (without adjustment) unless a deviation of the actual speed from the setpoint speed is determined, the constant availability of a speed estimate is not crucial for the execution of the control. Accordingly, the robot controller according to the invention may be said to adaptively alternate between open-loop control of the spray gun (when the estimate of actual speed does not deviate from the setpoint speed or the estimate is not available) and closed-loop control (when a deviation is determined). Besides, as mentioned above, the dependence of the thickness on speed and other factors may only be known locally around an operating point (e.g., as an elasticity), so that forward calculation of the setpoint speed from the thickness may be considerably more difficult than finding suitable incremental adjustments.

A used herein, an "indication" of a quantity in a program or script refers to a value which has been entered in explicit human- or machine-readable form by the operator or a programmer. While additional quantities can be implicit from a program - and may be derived therefrom on the basis of calculations and known relationships with quantities that are indicated in the program - the intended meaning of "indication" does not cover such implicit quantities.

Further, two setpoint quantities are "contemporaneous" in the sense of the claims if they are to be observed or executed by the robot controller in coinciding or overlapping periods of time. For example, if the program instructs the robot controller to move the robot arm at setpoint speed v* over a portion of the workpiece while causing the spray gun to apply *dq*/dt* units of fluid and *dp*/dt* units of air per unit time, then *v*, dq*/dt* and *dp*/dt* are contemporaneous setpoint quantities. A common way of programming a paint robot is to let the robot arm move over the workpiece at constant speed along a path such that the spray plume visits all points of each surface to be painted; therefore, the robot arm may typically be configured to have piecewise constant setpoint speed in respective periods of time.

A "compensation function" is an at least locally valid, theoretical or empirical relationship between actual robot arm speed v and at least one quantity x (e.g., fluid flow per unit time, air flow per unit time) that influences the thickness h of sprayed liquid. A compensation function may be an expression R in the form $R(v,x) = h$. A compensation function may be expressed as an implicit function $\bar{x}(v)$ such that $R(v, \bar{x}(v)) = R(v^*, x^*)$ when the speed v is in a neighborhood of the setpoint speed v*; the robot controller may feed the implicit function $\bar{x}(v)$ evaluated for the estimated actual speed v to the spray gun as an adjusted setpoint value of x when the speed has been determined to deviate. The expression $R$, implicit function $\bar{x}$ etc. may be represented analytically, as empirically fitted curves, value tables, an artificial neural network trained on representative examples or any other suitable machine-readable form.

As used herein, the term "spray gun" covers all products known in the field as atomizer gun, atomizer bell, paint bell, rotary bell atomizer, bell applicator and spray applicator. A spray gun in this sense may be adapted to apply a fluid, such as paint. There also exist spray guns for applying free-flowing dry powders in a powder coating applications, wherein the powder acts as solvent-free paint and thus is equivalent to a spray fluid.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

In one embodiment, the robot controller is further configured to take compensatory measures relating to the further setpoint quantity (e.g., atomization, air flow per unit time, spray plume geometry, electrostatic charging) in case of a determined speed deviation. Indeed, the robot controller may be configured to adjust, concurrently with the adjustment of the setpoint fluid flow per unit time, the further setpoint quantity in accordance with a second compensation function, which is different from the first compensation function. Because the second compensation function is defined independently from the first compensation function - and usually is different from the first compensation function as it relates to a different quantity - this embodiment makes it possible to adjust, in the case of a speed deviation, each setpoint value in an appropriate way. This is in the interest of an attractive end result with a high degree of uniformity within a batch of workpieces and between different batches.

In a second aspect, the invention provides a method of controlling a robot arm and a spray gun supported by the robot arm. The method comprises: obtaining a program comprising an indication of a setpoint speed of the robot arm and an indication of a contemporaneous further setpoint fluid flow per unit time of the spray gun and an indication of a contemporaneous further setpoint quantity of the spray gun; obtaining an estimate of actual speed of the robot arm; determining whether the estimate deviates from the setpoint speed; and adjusting, in case of a deviation, the setpoint fluid flow per unit time in accordance with a first compensation function.

A further aspect of the invention relates to a computer program containing instructions for causing a computer, or the robot controller in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storages of magnetic, optical or solid-state type. Still within the scope of "data carrier", such memories may be fixedly mounted or portable.

## BRIEF DESCRIPTION OF THE DRAWINGS

Aspects and embodiments are now described, by way of example, with reference to the accompanying drawings, on which:

figure 1 shows an industrial paint system comprising a robot arm equipped with a spray gun, a robot controller configured in accordance with an embodiment of the present invention, and a conveyor arrangement for bringing a workpiece into and out of the operating area of the robot arm;

figure 2 is a flowchart of a method according to an embodiment of the invention;

figures 3 to 5 are plots of various compensation functions for use in embodiments of the invention; and

figure 6 shows an example architecture of cooperating control algorithms suitable for controlling a robot arm and connected spray gun.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

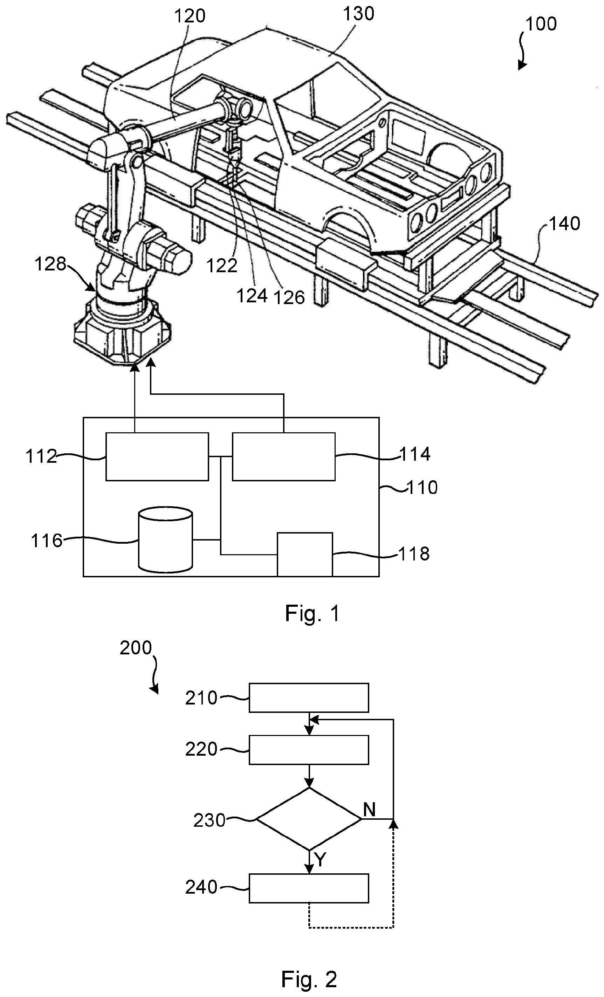

Figure 1 shows an industrial paint system 100 generally comprising a robot arm 120, a robot controller 110 and a conveyor arrangement 140. The robot arm 120 comprises multiple segments joined by rotatable or linear joints, which extends from a base 128 and supports, at its outer end, a spray gun 122 adapted for spraying fluid through a spray nozzle 124 onto surfaces of a stationary or moving workpiece 130 on the conveyor arrangement 140. The robot arm 120 may comprise (not shown) supply lines for feeding spray fluid, air, gases etc. to the spray gun 122, return lines for collecting excess fluid etc., as well as an electric harness for supplying electric power and control signals. To allow the spray gun 122 to reach various surfaces of the workpiece 130 and cover these efficiently, the robot arm 120 is movable by translations and/or rotations, and the spray gun 122 itself may be rotatable with respect to the robot arm 120. The speed of the robot arm 120 during such movements may be measured or estimated with reference to a tool center point (TCP) 126. The setpoint speed may refer to the TCP 126 as well.

The lower part of figure 1 shows an example structure of the robot controller 110, which comprises a motion control system 112, a process control system 114, a memory 116 suitable for storing executable software, including various programs, such as spray programs with indications of the setpoint quantities, and a user interface 118 configured to display various aspects of a current condition of the paint system 100 and to accept commands input by an operator. The programs may be prepared using the user interface 118 or uploaded directly to the memory 116. The motion control system 112 is primarily in charge of feeding the robot arm 120 with motion control signals directed to actuators therein and monitoring the robot arm 120 through rotary position sensors, torque/strain/pressure sensors and the like. The process control system 114 is primarily responsible for controlling aspects of the spray gun 122, such as atomization, electrostatic charging, various air flows modifying the shape of the spray plume, cleaning and replacement of nozzles.

In some embodiments, the motion control system 112 and the process control system 114 operate independently of each other, save that the control system 114 may execute setpoint quantities which have been adjusted in view of an estimate of the actual speed emanating from the motion control system 112. The mutual independence of the two systems 112, 114 may be achieved by letting them execute as different threads in a shared processing resource and/or execute on separate processing resources of the robot controller 110. This architecture of the robot controller 110 may contribute to stable operation of the paint system 100 and an ability to respond quickly to fluctuations in speed or other quantities.

A method 200 for controlling a robot arm 120 and attached spray gun 122 is visualized as the flowchart in figure 2. The method also represents an example way of operating the robot controller 110.

The method 200 makes reference to a program, obtained in a first step 210 of the method 200, which comprises an indication of a setpoint speed $v^*$ of the robot arm 120 and an indication of a contemporaneous further setpoint fluid flow per unit time $dq^*/dt$ of the spray gun 122 and an indication of a contemporaneous further setpoint quantity $x^*$ of the spray gun. A tuple ($v^*$, $dq^*/dt$, $x^*$) of values of the contemporaneous setpoint quantities may relate to a surface of the workpiece 130. When the workpiece 130 is a vehicle, the surface may be a roof, ceiling, door, fender etc.

In a second step 220 of the method 200, an estimate $v$ of the actual speed of the robot arm 120 is obtained while the robot arm 120 and spray gun 122 are processing said surface of the workpiece 130 for which the tuple of values of the contemporaneous setpoint quantities is valid. The estimate $v$ may be derived from a robot arm motion control signal or signals $u_1$ generated by the motion control system 112 without relying on a sensed momentary speed of the robot arm 120. Alternatively, the estimate $v$ is a reading of a sensor (not shown) arranged on or at the robot arm 120. The sensor may be an inertial sensor or an optical sensor. If the robot arm's 120 speed relative to the workpiece 130 is of interest, it may be preferable to use an optical sensor; the relative speed may be determined by tracking visual features on the surface of the workpiece 130, computing an optical flow and similar techniques. Further alternatively, the estimate may be derived from a sensor signal or sensor signals from a rotary position sensor or rotary position sensors attached or associated with respective actuators in the robot arm 120. The rotary position sensors may be implemented as resolvers or rotary encoders, from which the speed information may be computed.

In a third step 230, it is determined whether the estimate $v$ deviates from the setpoint speed $v^*$. If the robot is working close to its limitations in either axis speed or torque there can be a temporary drop in speed. Additionally, the conveyor arrangement 140 may move the workpiece 130 into an inconvenient area, where the robot arm 120 is working close to its kinematic limitation. From the point of view of the robot controller 110, a speed deviation may correspond to fulfilment of a condition on the form $|v - v^*| \geq \varepsilon$ for a predetermined constant $\varepsilon > 0$ which represents a tolerance. The tolerance can be set in view of how large thickness deviations in the end result are deemed acceptable, but the tolerance may also reflect the expected amount of noise in the estimation of the robot arm's 120 speed. If the condition is fulfilled, the third step 230 returns a positive decision (Y branch) and the execution of the method 200 proceeds to the fourth step 240. If instead $|v - v^*| < \varepsilon$ or the estimate $v$ is not available at this time instant, no deviation is determined to exist (N branch); for this outcome, the execution of the method 200 may continue at the second step 220, possibly after a suitable delay has expired, so that it is meaningful to renew the estimation of the speed of the robot arm 120.

In the fourth step 240, the setpoint fluid flow per unit time is adjusted in accordance with a first compensation function, i.e., from its value $dq^*/dt$ according to the indication in the program to an adjusted value, denoted $d\bar{q}/dt$. There is furthermore an optional adjustment of the contemporaneous further setpoint quantity $x^*$ of the spray gun in accordance with a second compensation function, the result of the adjustment being denoted $\bar{x}$. The adjusted values $d\bar{q}/dt$ and $\bar{x}$ of the setpoint quantities may then be fed to the spray gun 122 for the remaining duration of the processing of said surface of the workpiece 130. Alternatively, and clearly depending on the total extent of the surface, it may be prudent to renew the estimate $v$ of the robot arm's 120 speed, so that the adjusted values of the setpoint quantities $d\bar{q}/dt$ and $\bar{x}$ can be updated. The robot controller 110 may potentially resume use of the setpoint quantities according to the indications in the program in case of the outcome $|v - v^*| < \varepsilon$; if the fourth step 240 is terminated for this reason, the execution of the method 200 may continue from the second step 220, as described for the N branch of the third step 230.

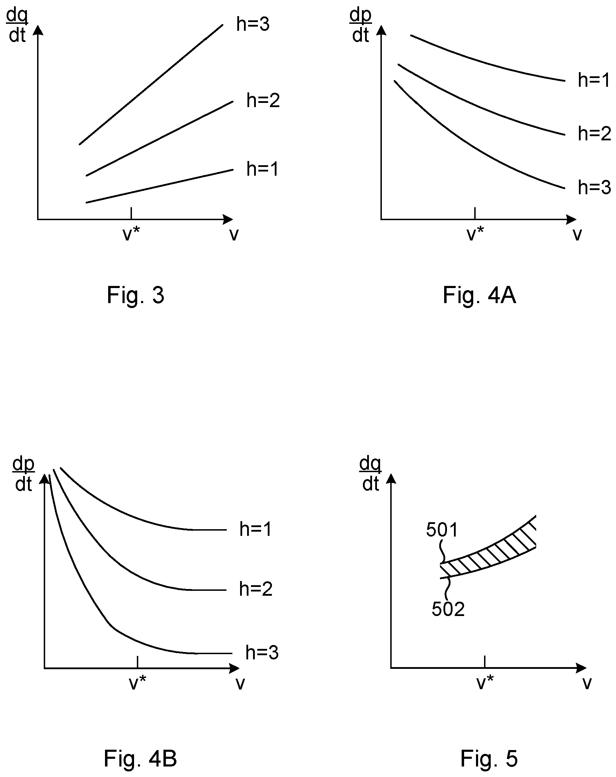

The concept of a compensation function has already been introduced and is further illustrated by the examples in figures 3, 4 and 5.

Figure 3 shows three compensation functions, corresponding to 1, 2 and 3 units of the thickness $h$, for the fluid flow per unit time $d\bar{q}/dt$. For a different setpoint quantity, a different family of compensation functions may apply. Each compensation function may be understood as a contour line of a completely or incompletely known thickness function. It is sufficient to have local knowledge of the compensation function in a neighborhood of the setpoint speed $v^*$. A possible scheme for utilizing a family of compensation functions like the one shown in figure 3 is as follows:

1. That one of the compensation functions which matches the setpoint quantities $v^*$, $dq^*/dt$ most closely is selected.

2. The selected compensation function for the estimated actual speed v is evaluated to yield an adjusted setpoint value $d\tilde{q}/dt$.

3. The adjusted setpoint value $d\tilde{q}/dt$ is applied to the spray gun.

A determined speed deviation may trigger adjustment of one or more setpoint quantities. For a given setpoint quantity, a different compensation function may apply depending on whether this setpoint quantity is going to be adjusted alone or together with further setpoint quantities. To illustrate this difference, figure 4A is a plot of a family of compensation functions to be used if the air flow per unit time $dp/dt$ is adjusted in combination with the fluid flow per unit time $dq/dt$. If instead the air flow per unit time $d\tilde{q}/dt$ is the sole quantity that is to be adjusted in response to a speed deviation, then the compensation functions in figure 4B shall be used. As seen from a comparison of figures 4A and 4B, the somewhat steeper slope in figure 4B corresponds to a relatively more vigorous response.

With reference to the fluid flow per unit time $d\tilde{q}/dt$ again, figure 5 depicts an alternative representation of a compensation function for one thickness value h = $h_0$. Figure 5 shows a hashed area enclosed by an upper bound 501 and a lower bound 502, which define a permissible range of the fluid flow per unit time for each value of the speed v in the neighborhood of the setpoint speed v*. It is noted that the spacing of the bounds 501, 502 is non-constant with respect to the speed $v$, which reflects that non-exact control of the fluid flow per unit time $d\tilde{q}/dt$ is somewhat more acceptable for higher values in this example use case. The fact that a range of fluid flow values is allowable for each speed value $v$ offers the robot controller 110 some freedom as to whether a small speed deviation shall be treated as negligible or shall trigger an adjustment; in this example, this freedom exists for the fluid flow but possibly not for other setpoint quantities.

As an alternative to using a compensation function of the type illustrated in figures 3-5, an incremental compensation may be applied. More precisely, letting s denote the distance traveled by the TCP 126, one realizes from the chain rule,

$$\frac{dq^*}{dt} = \frac{dq^*}{ds}\,v,$$

that the differential relationship

$$\Delta\frac{dq^*}{dt} = \frac{dq^*}{ds}\Delta v$$

holds for small $\Delta v$. Here $dq^*/ds$ may be understood as the setpoint fluid flow per unit distance travelled by the TCP 126 or equivalently the spray gun 122. It follows that the adjusted setpoint fluid flow per unit time can be computed as the setpoint flow per unit time $dq^*/dt$ indicated in the program with the addition of a correction term:

$$\frac{d\tilde{q}}{dt} = \frac{dq^*}{dt} + \frac{dq^*}{ds}(v - v^*).$$

A further conclusion to be drawn from this is that the slope of the first compensation function at the setpoint speed v* is proportional to a factor representing a desired fluid flow per unit length travelled by the spray gun 122 or TCP 126. This factor may be derived from the setpoint speed and setpoint fluid flow per unit time indicated in the executing program.

A still further alternative is to adjust the setpoint quantities on the basis of tabulated values.

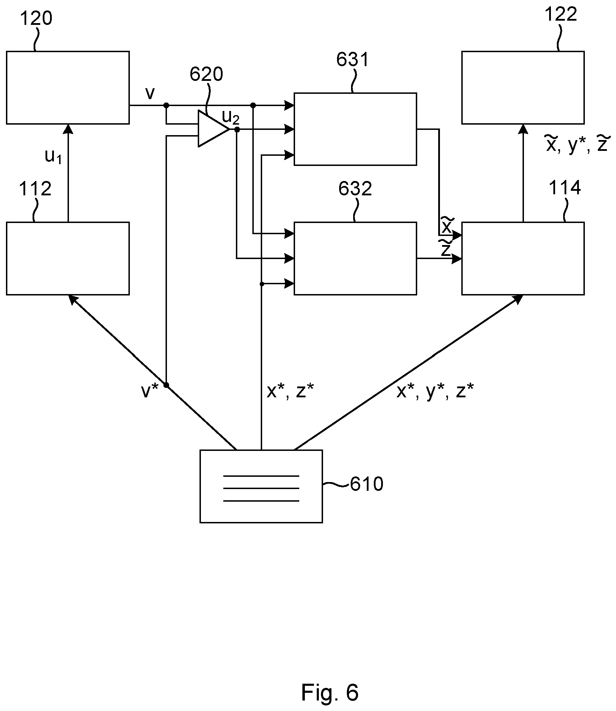

The architecture according to figure 6, where control algorithms suitable for controlling a robot arm and connected spray gun cooperate, will now be described. Reappearing from figure 1, the motion control system 112 is configured to generate a motion control signal or signals $u_1$ to be fed to actuators in the robot arm 120, and the process control system 114 controls the spray gun 122 on the basis of adjusted and unadjusted setpoint quantities $\tilde{x}$, y*, $\tilde{z}$. These entities of the robot controller 110 operate on the basis of a program 610, which contains indications of a setpoint speed v* and three setpoint quantities x*, y*, z*. By monitoring the robot arm 120 or the motion control signal $u_1$ (figure 6 depicts the former option), an estimate v of the actual speed of the robot arm 120 is fed to a comparator 620, configured to determine whether it deviates from the setpoint speed v*. If this is the case, the comparator 620 emits an activation signal $u_2$ directed to a first compensator 631 configured to output, in an active mode, an adjusted value $\tilde{x}$ of the first setpoint quantity x*. The activation signal $u_2$ from the comparator 620 furthermore activates a second compensator 632 configured to output, in the active mode, an adjusted value $\tilde{z}$ of the third setpoint quantity z*. The adjusted values $\tilde{x}$, $\tilde{z}$ of the first and third setpoint quantities are supplied to the process control system 114. It is noted that the motion control system 112 operates on the basis of the indications in program 610 but independently from the process control system 114. The comparator 620 and compensators 631, 632 may be implemented as application-specific circuitry or by software instructions.

**Claims**

1. A robot controller (110) adapted to execute a program comprising an indication of a setpoint speed of a robot arm (120), an indication of a contemporaneous setpoint fluid flow per unit time of a spray gun (122) supported by the robot arm, and an indication of a contemporaneous further setpoint quantity of the spray gun, wherein the robot controller is configured to:

obtain an estimate of actual speed of the robot arm, wherein the estimate is derived from one or more of:

a) a robot arm motion control signal or signals generated by the robot controller without relying on a sensed momentary speed of the robot arm,
b) a sensor signal or sensor signals from a rotary position sensor or rotary position sensors attached to respective actuator or actuators,
c) a sensor on or at the robot arm;

determine whether the estimate deviates from the setpoint speed; and,
in case of a deviation, adjust the setpoint fluid flow per unit time in accordance with a first compensation function.

2. The robot controller of claim 1, wherein the robot controller is further configured to concurrently adjust, in case of a deviation, the further setpoint quantity in accordance with a second compensation function, which is different from the first compensation function.

3. The robot controller of claim 1 or 2, wherein the further setpoint quantity is a quantitative characteristic of one or more of: atomization, air flow per unit time, spray plume geometry, electrostatic charging.

4. The robot controller according to option c) of claim 1, wherein the sensor on or at the robot arm is an inertial sensor and/or an optical sensor.

5. The robot controller of any of the preceding claims, wherein a slope of the first compensation function is proportional to a first factor representing a desired fluid flow per unit length travelled by the spray gun, wherein the robot controller is configured to derive the first factor from the indicated setpoint speed and setpoint fluid flow per unit time.

6. The robot controller of any of the preceding claims, adapted to control robot painting of a moving workpiece (130), particularly an object moved by a conveyor arrangement (140), wherein the actual speed of the robot arm is speed relative to the moving workpiece.

7. The robot controller of any of the preceding claims, comprising:

a motion control system (112) for controlling the robot arm; and
a process control system (114) for controlling the spray gun,
wherein the motion control system operates independently from the process control system.

8. A method (200) of controlling a robot arm (120) and a spray gun (122) supported by the robot arm, the method comprising:

obtaining (210) a program comprising an indication of a setpoint speed of the robot arm and an indication of a contemporaneous further setpoint fluid flow per unit time of the spray gun and an indication of a contemporaneous further setpoint quantity of the spray gun;
obtaining (220) an estimate of actual speed of the robot arm, wherein the estimate is derived from one or more of:

a) a robot arm motion control signal or signals generated by the robot controller without relying on a sensed momentary speed of the robot arm,
b) a sensor signal or sensor signals from a rotary position sensor or rotary position sensors attached to respective actuator or actuators,
c) a sensor on or at the robot arm;

determining (230) whether the estimate deviates from the setpoint speed; and
adjusting (240), in case of a deviation, the setpoint fluid flow per unit time in accordance with a first compensation function.

9. A computer program comprising instructions to cause the robot controller (110) of claim 1 to execute the steps of the method (200) of claim 8.

10. A data carrier having stored thereon the computer program of claim 9.

**Patentansprüche**

1. Robotersteuerung (110), die dazu eingerichtet ist, ein Programm auszuführen, das eine Anzeige einer Sollgeschwindigkeit eines Roboterarms (120), eine Anzeige eines zeitgleichen Sollfluiddurchflusses pro Zeiteinheit einer vom Roboterarm getragenen Spritzpistole (122) und eine Anzeige einer zeitgleichen weiteren Sollgröße der Spritzpistole umfasst, wobei die Robotersteuerung zu Folgendem konfiguriert ist:

Erhalten einer Schätzung einer Istgeschwindigkeit des Roboterarms, wobei die Schätzung von einem oder mehreren der Folgenden abgeleitet wird:

a) einem oder mehreren Roboterarmbewegungssteuersignalen, die von der Robotersteuerung erzeugt werden, ohne sich auf eine erfasste momentane Geschwindigkeit des Roboterarms zu stützen,
b) einem oder mehreren Sensorsignalen von einem oder mehreren Drehpositionssensoren, die an einem oder mehreren jeweiligen Aktuatoren angebracht sind,
c) einem Sensor auf oder an dem Roboterarm;

Bestimmen, ob die Schätzung von der Sollgeschwindigkeit abweicht; und, im Falle einer Abweichung, Anpassen des Sollfluiddurchflusses pro Zeiteinheit gemäß einer ersten Ausgleichsfunktion.

2. Robotersteuerung nach Anspruch 1, wobei die Robotersteuerung ferner dazu konfiguriert ist, im Falle einer Abweichung die weitere Sollgröße gemäß einer von der ersten Ausgleichsfunktion unterschiedlichen zweiten Ausgleichsfunktion zeitgleich anzupassen.

3. Robotersteuerung nach Anspruch 1 oder 2, wobei die weitere Sollgröße eine quantitative Kenngröße von einem oder mehreren der Folgenden ist: einer Zerstäubung, einem Luftdurchfluss pro Zeiteinheit, einer Sprühwolkengeometrie, einer elektrostatischen Aufladung.

4. Robotersteuerung nach Option c) von Anspruch 1, wobei der Sensor auf oder an dem Roboterarm ein Trägheitssensor und/oder ein optischer Sensor ist.

5. Robotersteuerung nach einem der vorhergehenden Ansprüche, wobei eine Steigung der ersten Ausgleichsfunktion proportional zu einem ersten Faktor ist, der einen gewünschten Fluiddurchfluss pro von der Spritzpistole zurückgelegter Längeneinheit repräsentiert, wobei die Robotersteuerung dazu konfiguriert ist, den ersten Faktor aus der angezeigten Sollgeschwindigkeit und dem Sollfluiddurchfluss pro Zeiteinheit abzuleiten.

6. Robotersteuerung nach einem der vorhergehenden Ansprüche, die dazu eingerichtet ist, eine Roboterlackierung eines sich bewegenden Werkstücks (130), insbesondere eines durch eine Förderanordnung (140) bewegten Objekts, zu steuern, wobei die Istgeschwindigkeit des Roboterarms eine Geschwindigkeit relativ zu dem sich bewegenden Werkstück ist.

7. Robotersteuerung nach einem der vorhergehenden Ansprüche, die Folgendes umfasst:

ein Bewegungssteuersystem (112) zum Steuern des Roboterarms; und
ein Prozesssteuersystem (114) zum Steuern der Spritzpistole,
wobei das Bewegungssteuersystem unabhängig von dem Prozesssteuersystem betrieben wird.

8. Verfahren (200) zum Steuern eines Roboterarms (120) und einer vom Roboterarm getragenen Spritzpistole (122), wobei das Verfahren Folgendes umfasst:

Erhalten (210) eines Programms, das eine Anzeige einer Sollgeschwindigkeit des Roboterarms, eine Anzeige eines zeitgleichen weiteren Sollfluiddurchflusses pro Zeiteinheit der Spritzpistole und eine Anzeige einer zeitgleichen weiteren Sollgröße der Spritzpistole umfasst;
Erhalten (220) einer Schätzung einer Istgeschwindigkeit des Roboterarms, wobei die Schätzung von einem oder mehreren der Folgenden abgeleitet wird:

a) einem oder mehreren Roboterarmbewegungssteuersignalen, die von der Robotersteuerung erzeugt werden, ohne sich auf eine erfasste momentane Geschwindigkeit des Roboterarms zu stützen,
b) einem oder mehreren Sensorsignalen von einem oder mehreren Drehpositionssensoren, die an einem oder mehreren jeweiligen Aktuatoren angebracht sind,
c) einem Sensor auf oder an dem Roboterarm;

Bestimmen (230), ob die Schätzung von der Sollgeschwindigkeit abweicht; und
Anpassen (240), im Falle einer Abweichung, des Sollfluiddurchflusses pro Zeiteinheit gemäß einer ersten Ausgleichsfunktion.

9. Computerprogramm, das Anweisungen umfasst, um die Robotersteuerung (110) nach Anspruch 1 zu veranlassen, die Schritte des Verfahrens (200) nach Anspruch 8 auszuführen.

10. Datenträger, auf dem das Computerprogramm nach Anspruch 9 gespeichert ist.

**Revendications**

1. Dispositif (110) de commande de robot conçu pour exécuter un programme comprenant une indication d'une vitesse de consigne d'un bras (120) de robot, une indication d'un débit de fluide de consigne simultané par unité de temps d'un pistolet pulvérisateur (122) supporté par le bras de robot, et une indication d'une autre grandeur de consigne simultanée du pistolet pulvérisateur, le dispositif de commande de robot étant configuré pour :

obtenir une estimation de la vitesse réelle du bras du robot, l'estimation étant tirée d'un ou plusieurs des éléments suivants :

a) un signal ou des signaux de commande de mouvement du bras du robot générés par le contrôleur du robot sans compter sur une vitesse instantanée détectée du bras du robot,
b) un signal de capteur ou des signaux de capteurs provenant d'un capteur de position rotative ou de capteurs de position rotative fixés à un actionneur ou à des actionneurs respectifs,
c) un capteur sur ou au niveau du bras du robot ;

déterminer si l'estimation s'écarte de la vitesse de consigne ; et
en cas d'écart, régler le débit de fluide de consigne par unité de temps conformément à une première fonction de compensation.

2. Dispositif de commande de robot selon la revendication 1, le dispositif de commande de robot étant en outre configuré pour ajuster simultanément, en cas d'écart, l'autre grandeur de point de consigne conformément à une seconde fonction de compensation, qui est différente de la première fonction de compensation.

3. Dispositif de commande de robot selon la revendication 1 ou 2, l'autre grandeur de point de consigne étant une caractéristique quantitative d'un ou plusieurs des éléments suivants : atomisation, débit d'air par unité de temps, géométrie de panache de pulvérisation, charge électrostatique.

4. Dispositif de commande de robot selon l'option c) de la revendication 1, le capteur sur ou au niveau du bras de robot étant un capteur inertiel et/ou un capteur optique.

5. Dispositif de commande de robot selon l'une quelconque des revendications précédentes, une pente de la première fonction de compensation étant proportionnelle à un premier facteur représentant un débit de fluide souhaité par unité de longueur parcourue par le pistolet pulvérisateur, le dispositif de commande de robot étant configuré pour déduire le premier facteur de la vitesse de consigne indiquée et du débit de fluide de consigne par unité de temps.

6. Dispositif de commande de robot selon l'une quelconque des revendications précédentes, adapté pour commander la peinture robotisée d'une pièce (130) en mouvement, en particulier d'un objet déplacé par un agencement (140) de convoyeur, la vitesse réelle du bras de robot étant la vitesse par rapport à la pièce en mouvement.

7. Dispositif de commande de robot selon l'une quelconque des revendications précédentes, comprenant :

un système (112) de commande de mouvement servant à commander le bras de robot ; et
un système (114) de commande de processus servant à commander le pistolet pulvérisateur, le système de commande de mouvement fonctionnant indépendamment du système de commande de processus.

8. Procédé (200) de commande d'un bras (120) de robot et d'un pistolet pulvérisateur (122) supporté par le bras de robot, le procédé comprenant :

l'obtention (210) d'un programme comprenant une indication d'une vitesse de consigne du bras de robot et une indication d'un débit de fluide de consigne supplémentaire simultané par unité de temps du pistolet pulvérisateur et une indication d'une autre grandeur de consigne simultanée du pistolet pulvérisateur ;
l'obtention (220) d'une estimation de la vitesse réelle du bras de robot, l'estimation étant tirée d'un ou
plusieurs des éléments suivants :

a) un signal ou des signaux de commande de mouvement du bras du robot générés par le contrôleur du robot sans compter sur une vitesse instantanée détectée du bras du robot,
b) un signal de capteur ou des signaux de capteurs provenant d'un capteur de position rotative ou de capteurs de position rotative fixés à un actionneur ou à des actionneurs respectifs,
c) un capteur sur ou au niveau du bras du robot ;

le fait de déterminer (230) si l'estimation s'écarte de la vitesse de consigne ; et
le réglage (240), en cas d'écart, du débit de fluide de consigne par unité de temps en fonction d'une première fonction de compensation.

9. Programme informatique comprenant des instructions pour amener le dispositif (110) de commande selon la revendication 1 à exécuter les étapes du procédé (200) selon la revendication 8.

10. Support de données sur lequel est stocké le programme informatique selon la revendication 9.

Fig. 1

Fig. 2

Fig. 3

Fig. 4A

Fig. 4B

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3525382 A
- EP 0145991 A
- US 5373221 A
- US 5292066 A
- US 4922852 A
- US 2008125900 A1
- US 2012219700 A1